# EUROPEAN PATENT APPLICATION

(11) **EP 4 131 803 A1**
(43) Date of publication of application: **08.02.2023**
(21) Application number: 21189967.9
(22) Date of filing: 05.08.2021
(51) Int. Cl.: H04B 10/275, H04J 14/02

(54) **METHOD AND OPTICAL NETWORK FOR ESTABLISHING A BIDIRECTIONAL TRAFFIC RELATIONSHIP BETWEEN AT LEAST ONE EDGE NODE AND A FIRST AND SECOND CORE NODE**

(71) Applicant: ADVA Optical Networking SE, 98617 Meiningen (DE)
(72) Inventor: Hinderthür, Henning, 86923 Finning (DE)
(74) Representative: Eder, Thomas

(57) **Abstract**

The invention relates to an optical network for establishing a bidirectional traffic relationship between at least one edge node (202) and a first and second core node (204, 208), the at least one edge node (202) comprising an optical transmitter (214), an optical receiver (216) and an optical coupler device (218A, 218B), wherein the optical coupler device (218A, 218B) is configured to optically couple a first remote port (222) of the at least one edge node (202) to a remote port (226) of the first core node (204) and a second remote port (224) of the at least one edge node (202) to a remote port (228) of the second core node (206) via an optical path (208). The optical network is characterized in that the optical transmitter (214) is configured to create a combined upstream optical signal (Uₒₚₜ) comprising a first upstream optical channel signal (U_{1,opt}) at a first optical center frequency for establishing the traffic relationship with the first core node (204) and a second upstream optical channel signal (U_{2,opt}) at a second differing optical center frequency for establishing the traffic relationship with the second core node (206), the optical transmitter (214) comprising a single light source and being configured to create the first and second upstream optical channel signal (U_{1,opt}, U_{2,opt}) using a sub-carrier modulation technique by directly modulating the single optical source or by modulating the optical signal created by the single optical source using a single optical modulator, and that the optical receiver (216) is configured to receive a combined downstream optical signal (Dₒₚₜ) at a receiving port of the optical receiver, the combined downstream optical signal comprising a first downstream optical channel signal (D_{1,opt}) created by the first core node (204) at a third optical center frequency and a second downstream optical channel (D_{2,opt})signal created by the second core node (206) at a fourth optical center frequency different from the third optical center frequency, wherein the optical receiver (216) is configured to use a sub-carrier demodulation technique for receiving the combined downstream optical signal (Dₒₚₜ), wherein the optical coupler device (218A, 218B) is configured to split the combined upstream optical signal (Uₒₚₜ) and to feed it to both the first and second remote port (222, 224) and wherein the optical coupler device (218A, 218B) is configured to receive the first and the second downstream optical channel signals (D_{1,opt}, D_{2,opt}) at the first and second remote port (222, 224), respectively, to combine these signals to the combined downstream optical signal (Dₒₚₜ) and to feed the combined downstream optical signal (Dₒₚₜ) to the receiving port of the optical receiver (216).

## Description

The invention relates to an optical network and a method of establishing a bidirectional traffic relationship between at least one edge node and a first and second core node, especially for metro infrastructures. The invention further relates to an optical edge node adapted to be used to implement the optical network and method.

Until now most metro infrastructures are ring-based networks where every edge node has an east and west interface. The main purpose of this is to provide a static and, as the case may be, redundant connection of all edge nodes to the central hub nodes (referred to as "core nodes" in the following description). If the core nodes are provided at the same location, a redundant connection between each edge node and the core node(s) is achieved. In known edge nodes, those east and west interfaces are two independent units. The transmission capacity between each edge node and the core nodes is in the region of 100 Gbit/s in each direction or even higher. Typically, a 100 Gbit/s (bidirectional) connection is realized by appropriate coherent high-speed interfaces for the west and east direction in the edge nodes. In the core nodes, usually a separate interface is used for establishing a bidirectional traffic relationship with each of the edge nodes. The disadvantage of such coherent high-speed interfaces is the complexity and thus rather high costs of the coherent transmitters and receivers.

It is an object of the present invention to provide an optical network for establishing a bidirectional traffic relationship between at least one edge node and a first and second core node having a simplified network node design and requiring a reduced constructional and financial effort for its realization. It is a further object of the invention to provide an appropriate edge node design and an appropriate method for realizing such an optical network.

The invention achieves these objects with the combination of features of claims 1, 7 and 11, respectively. Further embodiments of the invention become apparent from the dependent claims.

The invention starts from the finding that the number of transceiver interfaces, especially coherent transceiver interfaces (each comprising a coherent optical transmitter and a coherent optical receiver), required at the edge nodes can be reduced if optical sub-carrier modulation is used. That is, the two data streams comprising information that is to be transmitted from an edge node to the first and second core node, respectively, and vice versa, can be combined by creating a combined optical transmit signal (in the following referred to as "combined upstream optical signal") comprising the information of the two data streams in a respective one of two sub-carrier channels (in the following referred to as "upstream channel signal") and by feeding the combined upstream optical signal to both the first and second core node.

At the first and second core node, the combined optical transmit signal created by an edge node is received, preferably by a single (coherent) transceiver interface, using a sub-carrier demodulation method (i.e. receiving both upstream optical channel signals by a single coherent optical receiver) and extracting the data stream comprising the information intended for the respective (first or second) core node by appropriately processing the respective electrical signal(s) in the electrical domain. In this way, the data stream and the respective information intended for the respective core node is selected (demultiplexed) from the combined upstream optical signal by an appropriate electrical signal processing instead of optically filtering the combined upstream optical signal received at the respective core node.

Likewise, the data streams and the respective information that is to be transmitted from each of the core nodes to the respective edge node can be included in a respective downstream optical channel signal. Each of these signals may also be created by using sub-carrier modulation at the core nodes. The sub-carrier (center) frequencies can be chosen in such a way that two (or more) downstream optical channel signals can be created by using a single (as the case may be, coherent) transmitter at a core node. That is, one interface at a core node can be used to create the downstream optical channel signals that are to be transmitted to different edge nodes.

At an edge node, the downstream optical channel signals (at least the signals that shall be received at the respective edge node) are combined into a combined downstream optical signal which is fed to the optical (as the case may be, coherent) receiver of this edge node. The downstream optical channel signals which are comprised within the combined downstream optical signal and which are intended for the respective edge node are again filtered (or demultiplexed) in the electrical domain after having received and opto-electrically converted the combined downstream optical signal.

It shall be noted that any method of opto-electrically converting a combined downstream or upstream optical signal and applying an appropriate filtering or demultiplexing in the electrical domain is designated throughout the following description as "applying a sub-carrier demodulation technique for receiving the combined downstream or upstream optical signal".

According to the invention, the optical network for establishing a bidirectional traffic relationship between at least one edge node and a first and second core node comprises at least one edge node comprising an optical transmitter, an optical receiver and an optical coupler device, wherein the optical coupler device is configured to optically couple a first remote port of the at least one edge node to a remote port of the first core node and a second remote port of the at least one edge node to a remote port of the second core node via an optical connection path.

The optical transmitter is configured to create a combined upstream optical signal comprising a first upstream optical channel signal at a first optical center frequency for establishing the traffic relationship with the first core node and a second upstream optical channel signal at a second differing optical center frequency for establishing the traffic relationship with the second core node, the optical transmitter comprising a single light source and being configured to create the first and second upstream optical channel signal using a sub-carrier modulation technique by directly modulating the single optical source or by modulating the optical signal created by the single optical source using a single optical modulator.

The optical receiver is configured to receive a combined downstream optical signal at a receiving port of the optical receiver, the combined downstream optical signal comprising a first downstream optical channel signal created by the first core node at a third optical center frequency and a second downstream optical channel signal created by the second core node at a fourth optical center frequency different from the third optical center frequency, wherein the optical receiver is configured to use a sub-carrier demodulation technique for receiving the combined downstream optical signal.

The optical coupler device is configured to split the combined upstream optical signal and to feed it to both the first and second remote port, wherein the optical coupler device is configured to receive the first and the second downstream optical channel signals at the first and second remote port, respectively, to combine these signals to the combined downstream optical signal and to feed the combined downstream optical signal to the receiving port of the optical receiver.

Thus, as mentioned above, at the edge node only a single optical transmitter is required, as this optical transmitter is capable of creating a combined optical upstream signal (as a sub-carrier modulated signal) that includes the data streams or the information included therein which is intended for both core nodes. Further, only a single receiver (or a single transceiver) is required at the edge node. Likewise, only a single receiver is required at each edge node and an optical transmitter at the core nodes may be configured to create the downstream optical channel signals for two or more edge nodes by sub-carrier modulating the respective data streams intended for a selected edge node in such a way that the respective downstream optical channel signal has the correct center wavelength that is dedicated to the respective edge node.

Of course, an optical transceiver module according to the invention may comprise the optical transmitter and the optical receiver that apply the sub-carrier modulation and demodulation method and the optical coupler device. However, the optical coupler device may also be separate from the optical transceiver module.

According to an embodiment of the invention, the optical coupler device does not provide an optical pass-through path that connects the first and second remote port of the at least one edge node in order to pass through the downstream optical channel signals created by the first and second core node in the direction of the respective other core node. This simplifies the realization of the optical coupler device and further allows to use the same pair of center frequencies for the upstream and downstream optical channel signals that are used for establishing the bidirectional communication between the edge node and the first and second core node, i.e. the third and fourth optical center frequencies are identical with the first and second or the second and first optical center frequencies.

However, in this case, cascading of two or more edge nodes in a ring structure or chain-like structure is only possible if an optical router is used at each edge node which exclusively routes only the downstream optical channel signals to the respective edge node that are intended for it and which routes the combined upstream optical channel signal in both directions (i.e. the direction of the first and second core node). In other words, a series of two or more edge nodes can be cascaded by using an optical router for each edge node and an optical WDM scheme, wherein the optical routers are provided within the optical path connecting the first and second core node, and wherein each of the first and the second core nodes is configured to create the respective downstream optical channel signals for establishing the traffic relationships with each of the edge nodes in such a way that each downstream optical channel signal lies withing a dedicated optical downstream WDM channel, wherein each edge node is configured to create the respective upstream optical signal in such a way that it lies withing a dedicated optical upstream WDM channel and wherein the first and second remote port of each edge node is connected to a respective local port of the respective optical router.

Of course, this WDM scheme may also be applied if the first and second center wavelengths are different from the third and fourth center wavelengths.

According to another embodiment, the optical coupler device provides an optical pass-through path that connects the first and second remote port of the at least one edge node, and the third and fourth optical center frequencies are different from the first and second optical center frequencies.

In this embodiment, a series of two or more edge nodes can simply be cascaded by connecting the first and second remote ports of each pair of neighboring edge nodes and by connecting the first remote port of a first edge node of the series of two or more edge nodes to the remote port of the first core node and the second remote port of a last edge node of the series of two or more edge nodes to the remote port of the second core node. This leads to a simpler design of the edge nodes as these do not require an optical router.

An edge node according to the invention comprises the components and functionality as described above in connection with the whole optical network according to the invention.

The method according to the invention that can be implemented by the optical network (and the edge nodes) and that has been described above relies on using a sub-carrier modulation technique in order to create a combined optical upstream signal at each edge node, which is fed to both core nodes, and a sub-carrier demodulation technique in order to receive a combined downstream optical signal comprising the downstream optical channel signals created by the two core nodes and intended for the respective edge node.

In the following, the invention will be described in more detail with reference to the drawings. In the drawings,
- Fig. 1: shows a schematic block diagram of an optical network comprising a first and a second core node and several edge nodes;
- Fig. 2: shows a still schematic but more detailed block diagram of an optical network having a design known in the prior art comprising a first and a second core node and a single edge node;
- Fig. 3: shows a schematic block diagram of an optical network according to a first embodiment of the present invention having a structure as shown in Fig. 1, wherein the same pair of center frequencies is used for the bidirectional communication between the edge node and the first and second core node;
- Fig. 4: shows a block diagram of an optical coupler device comprised by the edge node of the optical network according to Fig. 3;
- Fig. 5: shows a schematic block diagram of an optical network according to a second embodiment comprising three edge nodes, wherein optical routing is performed at each edge node;
- Fig. 6: shows a schematic block diagram of an optical network according to a third embodiment comprising an edge node connected to a first and second core node, wherein differing pairs of center frequencies are used for the bidirectional communication between the edge node and the first and second core node;
- Fig. 7: shows a block diagram of an optical coupler device comprised by the edge node of the optical network according to Fig. 6;
- Fig. 8: shows a block diagram of an optical coupler device similar to Fig. 7, wherein optical circulators are used at both remote ports in order to combine/separate the unidirectional paths within the optical coupler device between the two optical circulators; and
- Fig. 9: shows a schematic block diagram of an optical network according to a fourth embodiment similar to the embodiment according to Fig. 6, comprising three edge nodes connected to a first and second core node.

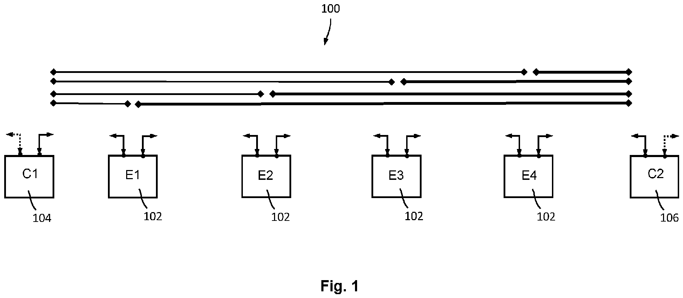

Fig. 1 shows, in a schematic representation, an optical network 100 as is often used in metro applications, for example. Several edge nodes 102 (also designated by E1, E2, E3, E4), in the example shown, are connected to a first core node 104 and a second core node 106 by respective optical paths (not shown). In order to establish respective bidirectional traffic relationships between each of the edge nodes 102 and the two core nodes, all nodes may be connected in a chain-like manner, wherein the data streams that are not intended for one or more of the edge nodes 102 are passed through in the direction of the respective core node 104, 106. In Fig. 1, logical traffic relationships between each edge node 102 and the first core node 104 are represented by respective thinner straight line segments whereas logical traffic relationships between each edge node 102 and the second core node 106 are represented by respective thicker straight line segments. As indicated by the dashed arrows of the core nodes C1, C2, these two nodes may form a single node having two interfaces, one for eastern-bound connections and one for western-bound connections. Of course, each interface may comprise one or more transceivers. This means that a physical ring structure would be realized, wherein each edge node is able to communicate with the single core node via an eastern-bound connection and a western-bound connection.

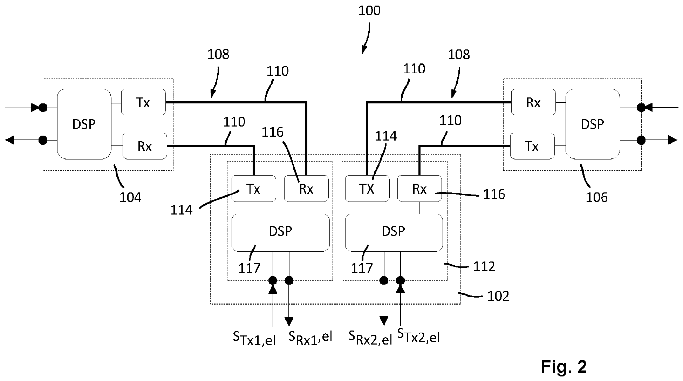

Fig. 2 shows a more detailed block diagram corresponding to the network structure in Fig. 1. A single edge node 102 is connected to a first and a second core node 104, 106 by means of optical paths 108, wherein each optical path is realized by two separate optical transmission media 110, e.g. optical fibers, one for each transmission direction. As shown in Fig .2, each edge node 102 comprises optical transmitters (Tx) 114 and optical receivers (Rx) 116 as well as digital signal processors (DSP) 117 for the connection to each core node 104, 106. The optical transmitter 114 and the optical receiver 116 for each connection direction may form a corresponding transceiver, which may be realized as a pluggable or integrated (i.e. non-pluggable) module 112. The respective transceiver may also include the respective digital signal processer 117. Each digital signal processor 117 receives a data stream to be sent, i.e. an electrical signal S_{Tx1,el}, S_{Tx2,el} and converts this signal into a modulating signal that is fed to the respective optical transmitter 114. Likewise, each digital signal processor 117 receives one or more opto-electrically converted signals from the respective optical receiver 116 that includes the information to be received from the respective core node 104, 106 (e.g. by demodulating the signals in the electrical domain) and converts these signals into a data stream to be received, i.e. an electrical signal S_{Rx1,el}, S_{Rx2,el}.

As apparent from this prior art design of an optical network and this known design of optical nodes for realizing such known optical network designs, each edge node 102 requires two separate transceivers and respective digital signal processors. If the respective network is configured to transmit high-speed optical signal transporting bit rates in the region of 100 Gbit/s (i.e. the data streams to be transported between the edge nodes 102 and the core nodes 104, 106, respectively), usually coherent data transmission in the optical domain is used within the optical network, i.e. a separate coherent optical transceiver comprising an optical coherent transmitter Tx and an optical coherent receiver Tx is required for each connection direction. The same applies to the core nodes 104, 106. Usually, for each optical connection to each of the edge nodes 102, a separate optical transceiver is required. The communication in the optical domain is in such cases usually realized by using a single optical carrier that is modulated in a desired manner. Thus, the requirement of two optical transceivers, especially coherent optical transceivers, increases the circuitry effort and costs.

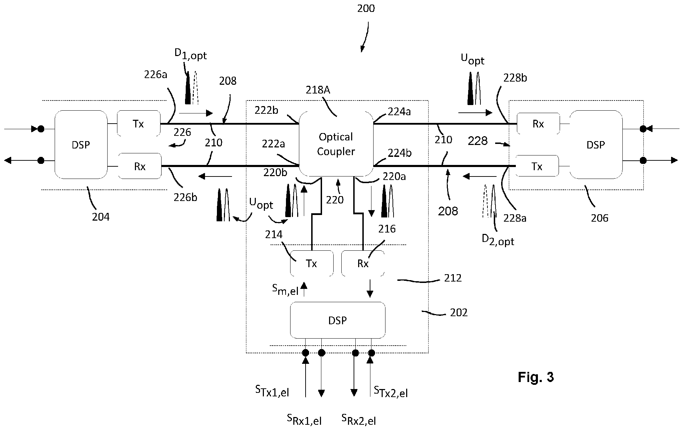

Fig. 3 shows a first embodiment of an optical network 202 according to the invention in a representation similar to Fig. 2. Therefore, corresponding components are designated by corresponding reference numbers which have been increased by 100. As apparent from this Figure, only a single digital signal processor (DSP) 217 and a single optical transceiver, comprising an optical transmitter 214 and an optical receiver 216 (of course, a separate optical transmitter and a separate optical receiver may be used instead) are used in an edge node 202. The single digital signal processor 217 is configured to receive both electrical signals S_{Tx1,el}, S_{Tx2,el} and to convert these signals into one or more electrical modulating signals S_{m,el} that are supplied to the single optical transmitter 214. The optical transmitter 214 may be a coherent optical transmitter comprising a laser diode that is directly modulated by an optical modulating signal S_{m,el} or a laser diode which creates an optical CW signal that is supplied to one or more optical modulators, which are driven by the one or more electrical modulating signals S_{m,el}. The optical transmitter is configured to create an optical transmit signal in the form of a sub-carrier modulated transmit signal, wherein the information of the first and second data stream, i.e. the corresponding electrical signals S_{Tx1,el}, S_{Tx2,el}, is included in respective upstream channels or upstream optical channel signals U_{1,opt} and U_{2,opt}. A first upstream channel or upstream optical channel signal U_{1,opt}, which comprises, in the optical spectrum, modulation components corresponding to the modulation of a first sub-carrier (optical) center frequency f₁, carries the information of the electrical signal S_{Tx1,el} that is intended for the first core node 204, and a second upstream channel or upstream optical channel signal U_{2,opt}, which comprises, in the optical spectrum, modulation components corresponding to the modulation of a first sub-carrier (optical) frequency f₂, carries the information of the electrical signal S_{Tx2,el} that is intended for the second core node 206. The optical transmit signal created by the optical transmitter 214 is referred to as combined upstream optical signal Uₒₚₜ comprising the first upstream optical channel signal U_{1,opt} and the second upstream optical channel signal U_{2,opt}. In Fig. 3, the first upstream optical channel signal U_{1,opt} is symbolized by the black-filled spectral component (around frequency f₁) and the second upstream optical channel signal U_{2,opt} is symbolized by the non-filled spectral component (around frequency f₂). The spectral component shown in a dashed manner symbolizes an unused channel or spectral component, i.e. the respective channel is not occupied by an optical channel signal.

The edge node 202 further comprises an optical coupler device 218A which is configured to receive the combined upstream optical signal Uₒₚₜ at a local receive port 220b of a local port 220 and to feed this signal to a transmit port 222a of a first remote port 222, which is connected to a receive port 226b of a remote port 226 of the first core node 204 by an optical medium 210 (e.g. an optical fiber), and to a transmit port 224a of a second remote port 224, which is connected to a receive port 228b of a remote port 228 of the second core node 206 by a further optical medium 210 (e.g. an optical fiber).

As shown in Fig. 3, a remote transmit port 226a of the remote port 226 of the core node 204 is connected to the receive port 222a of the first remote port 222 of the optical coupler device 118, and a remote transmit port 228a of the remote port 228 of the core node 206 is connected to the receive port 224a of the second remote port 224 of the optical coupler device 118 via a further respective optical medium 210, e.g. a respective optical fiber.

The optical coupler device 218A is further configured to receive a first downstream optical channel signal D_{1,opt} created by the first core node 204 (according to a respective data stream or electrical signal that is intended for the edge node 202) and received at a receive port 222b of the first remote port 222 of the optical coupler device 218A. Likewise, the optical coupler device 218A is configured to receive a second downstream optical channel signal D_{2,opt} created by the second core node 206 (according to a respective data stream or electrical signal that is intended for the edge node 202) and received at a receive port 224b of the second remote port 224 of the optical coupler device 218A. This first downstream optical channel signal D_{1,opt} is symbolized in Fig. 3 also by a black-filled spectral component (around frequency f₁) and the second downstream optical channel signal D_{2,opt} is symbolized by the non-filled spectral component (around frequency f₂). The use of identical frequencies for the up- and downstream signals in the embodiment according to Fig. 3 is possible as the optical coupler device 118A does not provide a pass-through capability (see below). The spectral components shown in a dashed manner symbolize an unused channel or spectral component, i.e. the respective channel is not occupied by an optical channel signal.

The optical coupler device 218A combines the two downstream optical channel signals D_{2,opt}, D_{2,opt} to a combined downstream optical signal Dₒₚₜ and outputs this signal at a local receive port 220b, which is connected to an input port of the optical receiver 216, which may be a coherent optical receiver. The optical receiver opto-electrically converts the combined downstream optical signal Dₒₚₜ into one or more electrical receive signals Dₑₗ that include the information transported in the combined downstream optical signal Dₒₚₜ and that are fed to the digital signal processor 217. The DSP 217 converts the signal(s) received into respective data streams to be received from the core nodes 204, 206, i.e. respective electrical signals S_{Rx1,el}, S_{Rx2,el}, by applying an appropriate digital demodulation method.

As already mentioned above, the optical coupler device 218A does not pass through the downstream optical channel signals D_{1,opt}, D_{1,opt} received at the receive ports 222b, 224b of the first and second remote port 222, 224 but feeds the respective signal exclusively to the local transmit port 220a of the local port 220 in the form of the combined downstream optical signal Dₒₚₜ.

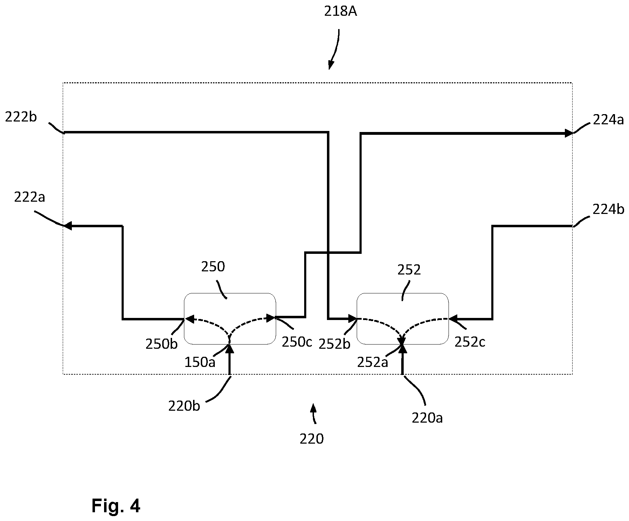

An embodiment of an optical coupler device 218A according to this alternative is shown in Fig. 4. This embodiment has a simple structure comprising a first and a second optical 1×2 splitter 250, 252. The first optical 1×2 splitter actually acts as a splitter that receives the combined upstream optical signal Uₒₚₜ at a common port 250a and feeds the signal Uₒₚₜ (i.e. respective power portions, e.g. 50 % of the power of the signal Uₒₚₜ received) to each of two splitting ports 250b, 250c, which are connected to or define the transmit port 222a and the transmit port 224a, respectively. The second optical 1x2 splitter 252 acts as a combiner. The combining ports 252b, 252c of the splitter 252 are connected with or define the receive port 222b and the receive port 224b, respectively. The optical 1×2 splitter 252 combines the downstream optical channel signals D_{1,opt}, D_{2,opt} into the combined downstream optical signal Dₒₚₜ and outputs this signal at a common port 252a, which is connected to or defines the transmit port 220a.

This coupler device 218A has a structure that is simple to realize. Even if the optical paths 208 that connect the edge node 202 and the core nodes 204, 206 comprise a single optical medium, e.g. an optical fiber, for both transmission directions, the structure remains rather simple. In this case, only an optical circulator (not shown) is to be connected to the ports 222a, 222b of the first remote port 222 and a further optical circulator is to be connected to the ports 224a, 224b of the second remote port 224, wherein the optical circulators serve to combine the separate optical paths within the optical coupler device 218A to a single optical path that comprises a single optical transmission medium for both transmission directions and to separate the single optical path (connected to the optical coupler) into the separate optical paths within the optical coupler. Of course, the optical circulators may be comprised by the optical coupler device 218A so that it has a first and a second remote port 222, 224 that are realized by a respective single port serving as combined receive and transmit port. In this case, the ports 222a, 222b and 224a, 224b become internal ports (located within the optical coupler device 218A).

Of course, any other port, especially the remote ports 226 and 228 of the core nodes 204, 206, may be realized in the same manner (i.e. by using an optical circulator) by a single port that is connected to an optical path 208 comprising a single transmission medium for both transmission directions.

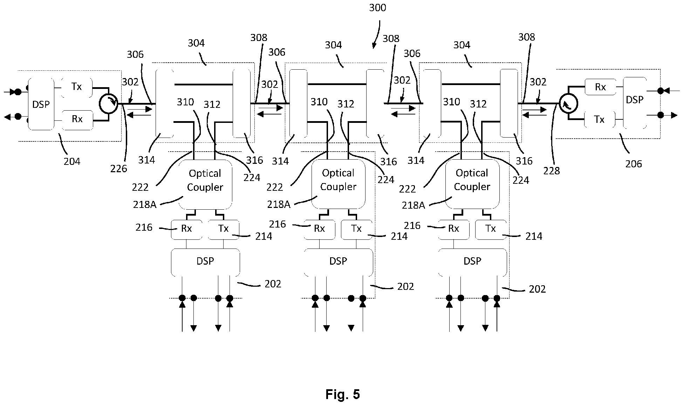

A disadvantage of the simple structure of the optical coupler device 218A is that, if two or more edge nodes 202 are to be connected to the core nodes 204, 206 in a cascaded (or chain-like) manner, an optical router is required in order to connect an edge node 202 to each of the core nodes 204, 206. Such a network structure is shown in Fig. 5. In this embodiment of an optical network 300, as an example, three edge nodes 202 are cascaded and connected to the core nodes 204, 206 via the optical path 208 that optically connects the remote ports 226, 228 of the core nodes 204, 206. A separate optical router 304 is used to optically couple each of the edge nodes 202 to the optical path 208. The optical routers 304 are provided within the optical path 208, wherein optical transmission media, e.g. optical fibers, are used to connect the remote ports 226, 228 of the core nodes 204, 206 to first and second remote ports 306, 308 of the respective neighboring optical routers 304. The optical transmission media form the optical path 208. The first and second remote ports 222, 224 of each edge node 202 are connected to a first and second local port 310, 312 of the respective optical router 304.

The optical path 208 of the embodiment of an optical network 300 shown in Fig. 5 comprises a single optical transmission medium, e.g. an optical fiber, for both transmission directions. This makes the structure of the optical routers 304 simpler as these comprise components that function in a bidirectional manner as explained below.

An optical WDM scheme is used for establishing the traffic relationships between each edge node 202 and both of the core nodes 204, 206 in the optical network 300 according to Fig. 5. As in the simplified network 200 shown in Fig. 3, which comprises a single edge node 202 only, each of the edge nodes 202 is configured to communicate with the first and second core node 204, 206 using a pair of upstream channel signals, which are transmitted from each edge node 202 to both core nodes 204, 206 and a pair of downstream channel signals, wherein a first downstream channel signal (of the respective pair of downstream channel signals) is transmitted from the first core node 204 to the respective edge node 202 and a second downstream channel signal (of the respective pair of downstream channel signals) is transmitted from the second core node 206 to the respective edge node 202. As both upstream channel signals are transmitted to both core nodes 204, 206, their center wavelengths must be different. However, each pair of downstream channel signals intended for a specific edge node 202 may cover the same optical spectrum asthe respective pair of upstream channel signals. Especially, the first upstream channel signal (intended for the first core node 204) may have the same center wavelength as the first downstream channel signal (created by the first core node 204) and the second upstream channel signal (intended for the second core node 206) may have the same center wavelength as the second downstream channel signal (created by the first core node 206). However, also the first upstream channel signal (intended for the first core node 204) may have the same center wavelength as the second downstream channel signal (created by the second core node 206) and the second upstream channel signal (intended for the second core node 204) may have the same center wavelength as the first downstream channel signal (created by the first core node 204). Of course, the center wavelengths of all pairs of upstream channel signals (i.e. all combined upstream optical signals) created by the edge nodes 202 must be different. The same applies to the center wavelengths of all pairs of downstream channel signals (i.e. all combined downstream optical signals) created by the core nodes 204, 206.

Each of the optical routers 302 of the optical network 300 in Fig. 5 comprises a first and a second optical multiplexer/demultiplexer device 314, 316. Each first multiplexer/demultiplexer device 314 is configured to exclusively route the first downstream channel signal created by the first core node 204 (which is included in the WDM signal received at the first remote port 306) and intended for the respective edge node 202 from the first remote port 306 to the first local port 310 and the combined upstream optical signal from the first local port 310 to the first remote port 306. All other downstream channel signals created by the first core node 204, which are not intended for the respective edge node 202, and all upstream channel signals intended for the second core node 206 are passed through the respective optical router 304 in the direction of the second core node 206. Each second multiplexer/demultiplexer device 316 is configured to exclusively route the second downstream channel signal created by the second core node 204 (which is included in the WDM signal received at the second remote port 308) and intended for the respective edge node 202 from the second remote port 308 to the second local port 312 and the combined upstream optical signal from the second local port 312 to the second remote port 308. All other downstream channel signals created by the second core node 206, which are not intended for the respective edge node 202, and all upstream channel signals intended for the first core node 206 are passed through the respective optical router 304 in the direction of the first core node 204.

The above description of the optical network 300 according to Fig. 5 illustrates that the upstream optical channel signals created by the cascaded edge nodes 202 and the downstream channel signals created by the core nodes 204, 206 realize a WDM transmission system. According to the invention, at least the combined upstream optical signals created by the edge nodes 202 (which comprise both respective upstream optical channel signals intended for the first and second core node 204, 206) are created by a single optical transmitter 214 and the combined downstream optical signal (which comprises both upstream optical channel signals intended for the respective edge node 202) is received by a single optical receiver 216. For creating the combined upstream optical signal and for receiving the combined downstream optical signal a sub-carrier modulation technique and a sub-carrier demodulation technique is applied, respectively. This generally applies to all embodiments of an optical network, an edge node and a method of establishing a bidirectional traffic relationship between at least one edge node and a first and a second core node of an optical network.

Also in the core nodes 204, 206, a sub-carrier modulation technique and a sub-carrier demodulation technique may be applied for creating the downstream optical channel signals, wherein two or more downstream optical channel signals having appropriately assigned center wavelengths, which are intended for different edge nodes 202, may be created by a single optical (as the case may be, coherent) transmitter. Likewise, two or more upstream optical channel signals may be received by a single (as the case may be, coherent) optical receiver. If the transmission capacity of a single optical transmitter (applying a sub-carrier modulation technique) is insufficient in order to create all downstream optical channel signals at the respective core node 204, 206, two or more optical transmitters may be used, wherein the respective groups of downstream optical channel signals, each being created by a single optical transmitter, may be optically multiplexed before they are output at the remote port of the respective core node 204, 206. Likewise, if the receiving capacity of a single optical receiver (applying a sub-carrier demodulation technique) is insufficient in order to receive all upstream optical channel signals at the respective core node 204, 206, two or more optical receivers may be used, wherein each of the optical receivers is configured to receive a dedicated group of upstream optical channel signals. The groups of upstream optical channel signals may be created by optically demultiplexing the upstream optical channel signals that are received at the remote port of the respective core node 204, 206.

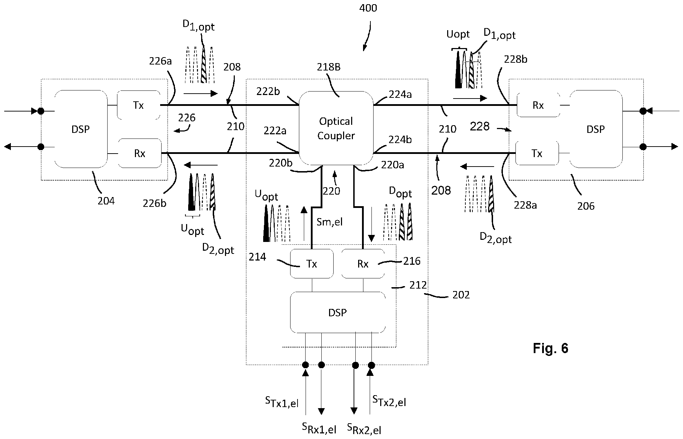

Fig. 6 shows an optical network 400 similar to the network 200 according to Fig. 3. Thus, for all identical components and functionalities identical reference signs are used in Fig. 6.

The decisive difference between the optical networks 200 and 400 is, however, that an optical coupler device 218B is used in the edge node 202 of the network 400 which provides a pass-through path for the downstream channel signals D_{1,opt}, D_{2,opt} created by the first and second core node 204, 206 (according to a respective data stream or electrical signal that is intended for the edge node 202) and received at the receive ports 222b, 224b of the first and second remote ports 222, 224 of the optical coupler device 218. That is, the optical transmission media 210 between the edge node 202 and the core nodes 204, 206 transmit in the direction to the respective core node 204, 206 the respective downstream optical channel signal D_{1,opt}, D_{2,opt} in addition to the combined upstream optical signal Uₒₚₜ. This requires that the center wavelengths of the downstream optical channel signals D_{1,opt}, D_{2,opt} must be different from the center wavelengths of the upstream optical channel signals U_{1,opt}, U_{2,opt} (which are comprised by the combined upstream optical signal Uₒₚₜ).

This is symbolized in Fig. 6 by spectral components (in the optical domain), wherein, as in the embodiment according to Fig. 3, the first upstream optical channel signal U_{1,opt} is symbolized by the black-filled spectral component (around frequency f₁) and the second upstream optical channel signal U_{2,opt} is symbolized by the non-filled spectral component (around frequency f₂). Further, the first downstream optical channel signal D_{1,opt} is symbolized by a spectral component (around frequency f₁) that is hatched from top left to bottom right and the second downstream optical channel signal D_{2,opt} is symbolized by a spectral component (around frequency f₂) that is hatched from top right to bottom left. This indicates that the four center frequencies of the up- and downstream signals must be different. As in Fig. 3, the spectral components shown in a dashed manner symbolize an unused channel or spectral component, i.e. the respective channel is not occupied by an optical channel signal.

As explained above, the bidirectional communication between the edge node 202 and the core nodes 204, 206 in the embodiment according to Fig. 6 requires a larger total bandwidth due to the pass-through path provided by the optical coupler device 118B. However, as will become apparent from the below description, in an optical network comprising two or more cascaded edge nodes 202, using optical couplers 218B that provide a pass-through path leads to the advantage that no optical routers are required for cascading edge nodes 202 of this kind.

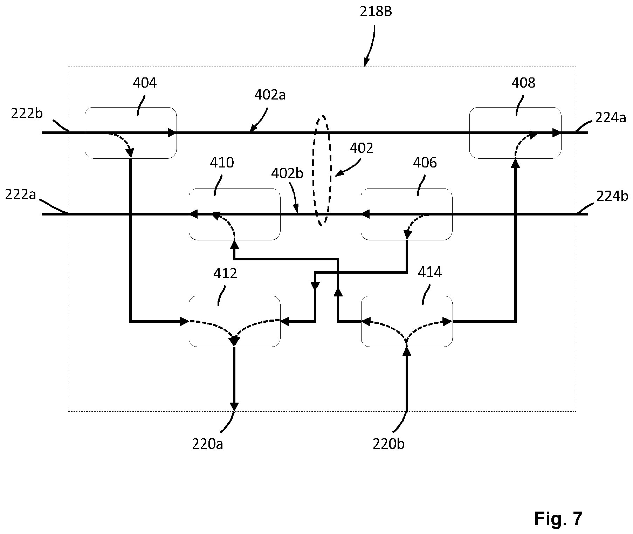

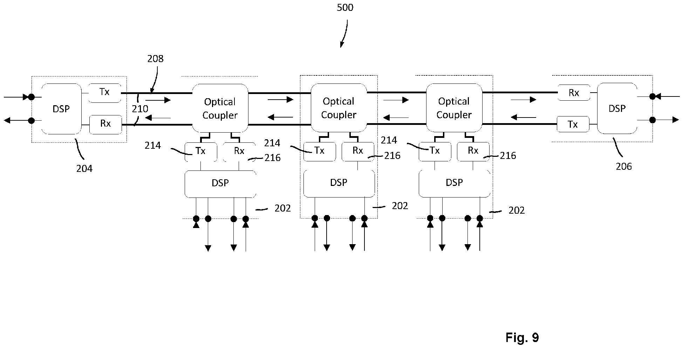

Fig. 7 shows an embodiment of an appropriate optical coupler device 218B providing pass-through capability. The optical coupler device 218B comprises an optical pass-through path 402 connecting the first and second remote port 222, 224, respectively. As this type of an optical coupler device is configured to be used in an optical network that connects the core nodes 204, 206 and the edge node(s) 202 by a separate optical transmission medium, e.g. an optical fiber, as shown in Figs. 6 and 9, separate transmit ports 222a, 224a and separate receive ports form the first and second remote ports 222, 224. Internally, the optical coupler device 218B comprises two separate unidirectional pass-through paths 402a, 402b, wherein pass-through path 402a connects the receive port 222b and the transmit port 224a and pass-through path 402b connects the receive port 224b and the transmit port 222a.

Within each of the unidirectional pass-through paths 402a, 402b an optical 1×2 splitter 404, 406 and an optical 2×1 combiner 408, 410 (each of which is an optical 1×2 splitter operated in a combining mode) is provided. The optical splitter 404 receives all optical channel signals that are present at the receive port 222b, i.e. the optical downstream channel signals created by the core node 204 and the optical upstream channel signals created by the edge node(s), which are provided (seen in this transmission direction) upstream with respect to the edge node 202 comprising the respective optical coupler device 218B, and splits these signals into respective identical signals having an optical power defined by the splitting ratio (and optical losses) of the optical splitter 404. One of the split signals is fed to the optical 2x1 combiner 408 provided within the unidirectional pass-through path 402a and the other of the split signals is fed to a further optical 2x1 combiner 412. Likewise, the optical splitter 406 receives all optical channel signals that are present at the receive port 224b, i.e. the optical downstream channel signals created by the core node 206 and the optical upstream channel signals created by the edge node(s), which are provided (seen in this transmission direction) upstream with respect to the edge node 202 comprising the respective optical coupler device 218B, and splits these signals into respective identical signals having an optical power defined by the splitting ratio (and optical losses) of the optical splitter 406. One of the split signals is fed to the optical 2×1 combiner 410 provided within the unidirectional pass-through path 402b and the other of the split signals is fed to the further optical 2×1 combiner 412. The further optical 2×1 combiner 412 combines the respective split signals corresponding to the optical channel signals received at the receive ports 222b and 224b and outputs the combined signal at the local transmit port 220a, which is connected to the optical receiver 216 (not shown in Fig. 7).

The optical coupler device 218B comprises a further optical 1×2 splitter 414, which receives, at a common port that is connected with or defines the local receive port 220a, the combined optical upstream signal Uₒₚₜ created by the respective optical transmitter 214, which Is connected to the local receive port 220a. The further optical 1×2 splitter 414 splits this combined optical upstream signal Uₒₚₜ and feeds one of the split signals to the optical 2×1 combiner 408 within the unidirectional pass-through path 402a and the other of the split signals to the optical 2×1 combiner 410 within the unidirectional pass-through path 402b. in this way, the respective split optical upstream signal Uₒₚₜ is combined with the respective pass-through signals and the respective combined signal is output at the respective transmit port 222a, 224a of the optical coupler device 218B.

Thus, as in case of the optical coupler device 218A according to Fig. 4, only passive optical components are required for the optical coupler device 218B. It shall further be mentioned that also the optical routers 304 comprised by the optical network 300 in Fig. 5 may be realized by using exclusively passive optical components, e.g. arrayed waveguide gratings having the required multiplexing and demultiplexing capability.

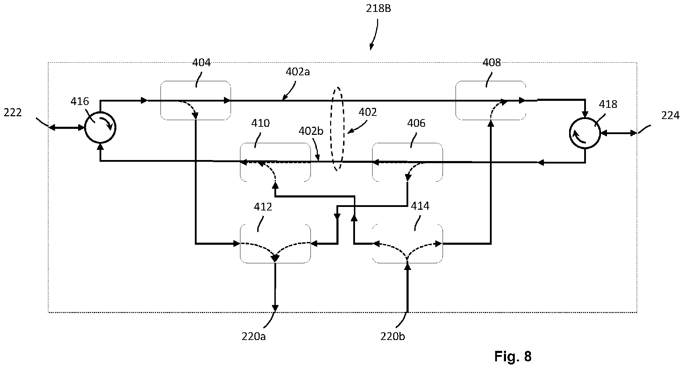

Fig. 8 shows a further embodiment of an optical coupler device 218B providing pass-through capability. The only difference between the embodiments according to Figs. 7 and 8 is that the optical coupler device 218B according to Fig. 8 further comprises optical circulators 416, 418, which are provided at the separate transmit and receive ports of the embodiment in Fig. 7. The optical circulators are used to combine the unidirectional pass-through paths 402a, 402b in order to connect these paths to the first and second remote port 222, 224 (and, of course, to separate a bidirectional path in order to connect it to two unidirectional paths), respectively. That is, in this embodiment of an optical coupler device 218B, the remote ports 222, 224 are realized as combined transmit and receive ports. Thus, this optical coupler device 218B may be used for optical networks that use a single optical transmission medium 210 for connecting the core nodes 204, 206 and the edge node(s) 202.

Of course, this principle of using optical circulators in order to combine unidirectional optical paths to a single bidirectional path and vice versa may also be used at the core nodes 204, 206 (see e.g. Fig. 5).

The optical network 500 shown in Fig. 9 is similar to the network 400 in Fig. 6. It comprises (as simplified example) three edge nodes 202 each of which comprises an optical coupler device 218B according to Fig. 7. As explained above in connection with the optical network 400 according to Fig. 6, each edge node 202 communicates bidirectionally with each of the core nodes 204, 206. For each of the respective two bidirectional traffic relationships, two upstream optical channel signals (in the form of a combined upstream optical signal) at two differing center wavelengths and two downstream optical channel signals at two further differing wavelengths are used. The two bidirectional traffic relationships between each edge node 202 and the first and second core node 204, 206 occupy four channels. The core nodes 204, 206 and the edge nodes are connected by an optical path 208 comprising an optical transmission medium 210 for each transmission direction.

Each of the edge nodes 202 receives, at the respective optical receiver 216, all optical channel signals that are guided in the respective sections of the optical path 208, i.e. all downstream optical channel signals created by the optical core nodes 204, 206 and all upstream optical channel signals created by the edge nodes 202 located upstream (seen in the respective transmission direction) of the respective edge node 202. The optical transmitter 214 of each edge node 202 opto-electrically converts all optical channel signals received and the digital signal processor 217 selects the two respective downstream channel signals to be demodulated in the electrical domain using an appropriate sub-carrier demodulation method. Thus, the edge nodes 202 may use identical components and have an identical structure.

It shall finally be noted that the upstream optical channel signals can be used to simultaneously establish traffic relationships between the respective edge node 202 and the first and second core node 202, 206, which are fully independent ofeach other. In addition, if one of the communication paths is unavailable, e.g. because one of the core nodes 204, 206 is unavailable or the physical transmission path (e.g. an optical fiber) has been broken, the respective other communication path to the respective other core node may be used to establish path protection. Of course, this is only possible in cases in which the core node 204, 206 to which the communication is still possible has either a further communication path to the respective other core node or in cases in which the core nodes 204, 206 are provided at the same location (or are even integrated to form a single core node that has the ability to communicate via two interfaces) so that a physical ring structure is realized.

### List of reference signs

- 100: optical network
- 102: edge node
- 104: core node
- 106: core node
- 108: optical path
- 110: optical transmission medium / optical fiber
- 112: module
- 114: optical transmitter
- 116: optical receiver
- 117: digital signal processor

- 200: optical network
- 202: edge node
- 204: core node
- 206: core node
- 208: optical path
- 210: optical transmission medium / optical fiber
- 212: module
- 214: optical transmitter
- 216: optical receiver
- 217: digital signal processor
- 218A: optical coupler device
- 218B: optical coupler device
- 220: local port
- 220a: local transmit port
- 220b: local receive port
- 222: first remote port (of edge node 202)
- 222a: transmit port (of first remote port 222)
- 222b: receive port (of first remote port 222
- 224: second remote port (of edge node 202)
- 224a: transmit port (of second remote port 224)
- 224b: receive port (of second remote port 224)
- 226: remote port (of first core node 204)
- 226a: transmit port (of first core node 204)
- 226b: receive port (of first core node 204)
- 228: remote port (of second core node 204)
- 228a: remote transmit port (of second core node 204)
- 228b: remote receive port (of second core node 204)

- 250: optical 1x2 splitter
- 252: optical 1x2 splitter

- 300: optical network
- 304: optical router
- 306: first remote port (of optical router 304)
- 308: second remote port (of optical router 304)
- 310: first local port (of optical router 304)
- 312: first local port (of optical router 304)
- 314: first optical multiplexer/demultiplexer device
- 316: second optical multiplexer/demultiplexer device

- 400: optical network
- 402: pass-through path
- 402a: unidirectional pass-through path
- 402b: unidirectional pass-through path
- 404: optical 1x2 splitter
- 406: optical 1x2 splitter
- 408: optical 2x1 combiner
- 410: optical 2x1 combiner
- 412: further optical 2x1 combiner
- 414: further optical 1x2 splitter
- 416: optical circulator
- 418: optical circulator

- S_{Tx1,el}: electrical signal corresponding to data stream to be sent to first core node
- S_{Tx2,el}: electrical signal corresponding to data stream to be sent to first core node
- S_{Rx1,el}: electrical signal corresponding to data stream to be received from first core node
- S_{Rx2,el}: electrical signal corresponding to data stream to be received from second core node
- S_{m,el}: electrical modulation signal
- U_{1,opt}: upstream optical channel signal
- U_{2,opt}: upstream optical channel signal
- Uₒₚₜ: combined upstream optical signal
- Dₒₚₜ: combined downstream optical signal
- D_{1,opt}: downstream optical channel signal
- D_{2,opt}: downstream optical channel signal

## Claims

1. An optical network for establishing a bidirectional traffic relationship between at least one edge node (202) and a first and second core node (204, 208), the at least one edge node (202) comprising an optical transmitter (214), an optical receiver (216) and an optical coupler device (218A, 218B), wherein the optical coupler device (218A, 218B) is configured to optically couple a first remote port (222) of the at least one edge node (202) to a remote port (226) of the first core node (204) and a second remote port (224) of the at least one edge node (202) to a remote port (228) of the second core node (206) via an optical path (208),
**characterized in**
(a) **that** the optical transmitter (214) is configured to create a combined upstream optical signal (Uₒₚₜ) comprising a first upstream optical channel signal (U_{1,opt}) at a first optical center frequency for establishing the traffic relationship with the first core node (204) and a second upstream optical channel signal (U_{2,opt}) at a second differing optical center frequency for establishing the traffic relationship with the second core node (206), the optical transmitter (214) comprising a single light source and being configured to create the first and second upstream optical channel signal (U_{1,opt}, U_{2,opt}) using a sub-carrier modulation technique by directly modulating the single optical source or by modulating the optical signal created by the single optical source using a single optical modulator, and
(b) **that** the optical receiver (216) is configured to receive a combined downstream optical signal (Dₒₚₜ) at a receiving port of the optical receiver, the combined downstream optical signal comprising a first downstream optical channel signal (D_{1,opt}) created by the first core node (204) at a third optical center frequency and a second downstream optical channel (D_{2,opt})signal created by the second core node (206) at a fourth optical center frequency different from the third optical center frequency, wherein the optical receiver (216) is configured to use a sub-carrier demodulation technique for receiving the combined downstream optical signal (Dₒₚₜ),
(c) wherein the optical coupler device (218A, 218B) is configured to split the combined upstream optical signal (Uₒₚₜ) and to feed it to both the first and second remote port (222, 224) and wherein the optical coupler device (218A, 218B) is configured to receive the first and the second downstream optical channel signals (D_{1,opt}, D_{2,opt}) at the first and second remote port (222, 224), respectively, to combine these signals to the combined downstream optical signal (Dₒₚₜ) and to feed the combined downstream optical signal (Dₒₚₜ) to the receiving port of the optical receiver (216).

2. The optical network according to claim 1, **characterized in that** the optical coupler device (218A) does not provide an optical pass-through path that connects the first and second remote port (222, 224) of the at least one edge node (202) in order to pass through the downstream optical channel signals (D_{1,opt}, D_{2,opt}) created by the first and second core node 204, 206) in the direction of the respective other core node (204, 206).

3. The optical network according to claim 2, **characterized in that** the third and fourth optical center frequencies are identical with the first and second or the second and first optical center frequencies.

4. The optical network according to claims 2 or 3, **characterized in that** a series of two or more edge nodes (202) are cascaded by using an optical router (304) for each edge node (202) and an optical WDM scheme, the optical routers (304) being provided within the optical path (208) connecting the first and second core node (204, 206), wherein the first and the second core node (204, 206) is configured to create the respective downstream optical channel signals (D_{1,opt}, D_{2,opt}) for establishing the traffic relationships with each of the edge nodes in such a way that each downstream optical channel signal (D_{1,opt}, D_{2,opt}) lies withing a dedicated optical downstream WDM channel, wherein each edge node (202) is configured to create the respective upstream optical channel signal (U_{1,opt}, U_{2,opt}) in such a way that it lies withing a dedicated optical upstream WDM channel and wherein the first and second remote port (222, 224) of each edge node (202) is connected to a respective local port (310, 312) of the respective optical router (304).

5. The optical network according to claim 1, **characterized in that** the optical coupler device (218A, 218B) provides an optical pass-through path (402) that connects the first and second remote port (222, 224) of the at least one edge node (202) and that the third and fourth optical center frequencies are different from the first and second optical center frequencies.

6. The optical network according to claim 5, **characterized in that** a series of two or more edge nodes (202) are cascaded by connecting the first and second remote ports (222, 224) of each pair of neighboring edge nodes (202) and by connecting the first remote port (222) of a first edge node (202) of the series of two or more edge nodes to the remote port of the first core node (204) and the second remote port (224) of a last edge node (202) of the series of two or more edge nodes to the remote port (228) of the second core node (206).

7. An optical edge node for an optical network according to one of the preceding claims, the optical edge node (202) comprising an optical transmitter (214), an optical receiver (216) and an optical coupler device (218A, 218B), wherein the optical coupler device (218A, 218B) is configured to optically couple a first remote port (222) of the at least one edge node (202) to a remote port (226) of the first core node (204) and a second remote port (224) of the at least one edge node (202) to a remote port (228) of the second core node (206) via an optical path (208),
**characterized in**
(a) **that** the optical transmitter (214) is configured to create a combined upstream optical signal (Uₒₚₜ) comprising a first upstream optical channel signal (U_{1,opt}) at a first optical center and a second upstream optical channel signal (U_{2,opt}) at a second differing optical center, the combined upstream optical channel signal (Uₒₚₜ) being output at a transmitting port of the optical transmitter, the optical transmitter (214) comprising a single light source and being configured to create the first and second upstream optical channel signal (U_{1,opt}, U_{2,opt}) using a sub-carrier modulation technique by directly modulating the single optical source or by modulating the optical signal created by the single optical source using a single optical modulator, and
(b) **that** the optical receiver (216) is configured to receive a combined downstream optical signal at a receiving port of the optical receiver, the combined downstream optical signal (Dₒₚₜ) comprising a first downstream optical channel signal (D_{1,opt}) at a third optical center frequency and a second downstream optical channel signal (D_{2,opt}) at a fourth optical center frequency different from the third optical center frequency, wherein the optical receiver (214) is configured to use a sub-carrier demodulation technique for receiving the combined downstream optical signal (Dₒₚₜ),
(c) wherein the optical coupler device (218A, 218B) is configured to split the combined upstream optical signal (Uₒₚₜ) and to feed it to both the first and second remote port (222, 224) and wherein the optical coupler device (218A, 218B) is configured to receive the first and the second downstream optical channel signals (D_{1,opt}, D_{2,opt}) at the first and second remote port (222, 224), respectively, to combine these signals to the combined downstream optical signal (Dₒₚₜ) and to feed the combined downstream optical signal (Dₒₚₜ) to the receiving port of the optical receiver (216).

8. The optical edge node according to claim 7, **characterized in**
(a) **that** the optical coupler device (218A) does not provide an optical pass-through path that connects the first and second remote port (222, 224) of the at least one edge node (202) in order to pass through the downstream optical channel signals (D_{1,opt}, D_{2,opt}),
(b) **that** the optical coupler device (218A) comprises an optical 2×1 combiner (252) having a first and a second input port and an output port, the first input port being connected to the first remote port (222) of the edge node (202), the second input port being connected to the second remote port (224) of the edge node (202) and the output port being connected to the receiving port of the optical receiver (216) and
(c) **that** the optical coupler device (218A) comprises an optical 2×1 splitter (250) having an input port and a first and a second output port, the input port being connected to the transmitting port of the optical transmitter (214), the first output port being connected to the first remote port (222) of the edge node (202) and the second output port being connected to the second remote port (224) of the edge node (202).

9. The optical edge node according to claim 7, **characterized in**
(a) **that** the optical coupler device (218B) defines an optical pass-through path (402) connecting the first and second remote port (222, 224) of the edge node (202) in order to pass through the optical channel signals received at the first and second remote port (222, 224) in the direction to the respective other remote port (222, 224), wherein the optical pass-through path (402) comprises a first and second unidirectional optical pass-through path (402a, 402b),
(b) wherein each of the unidirectional pass-through paths (402a, 402b) comprises an optical 1×2 splitter (404, 406) and an optical 2×1 combiner(408, 410),
(i) each of the optical 2×1 combiners (408, 410) being configured to combine the combined upstream optical signal (Uₒₚₜ), which is received from a further optical 2×1 splitter (414) comprised by the optical coupler device (202), and the respective optical channel signals guided in the respective unidirectional pass-through path (402a, 402b), and
(ii) each of the optical 1×2 splitters (404, 406) being configured to split the respective optical channel signals guided in the respective unidirectional pass-through path, which also comprise the respective downstream optical channel signal (D_{1,opt}, D_{2,opt}) intended for the respective edge node (202), and to feed the signals split to a further optical 2×1 combiner (412) comprised by the optical coupler device (202),
(c) **that** the further optical 2×1 splitter (414) is configured to receive the combined upstream optical signal (Uₒₚₜ) from the transmitting port of the optical transmitter (214) and to feed the combined upstream optical signal (Uₒₚₜ) to each of the optical 2×1 combiners (408, 410) provided within the first and second unidirectional optical pass-through path (402a, 402b), and
(d) **that** the further optical 2×1 combiner (412) is configured to receive the respective optical channel signals from the optical 1×2 splitters (404, 406) provided within the first and second unidirectional optical pass-through path (402a, 402b) and to feed the optical channel signals to the receiving port of the optical receiver (216).

10. The optical edge node according to one of claims 7 to 9, **characterized in that** the first and second remote ports (222, 224) are realized as single bidirectional ports, wherein the optical coupler device (218A, 218B) comprises passive optical path separating and combining means (416, 418) each having a single bidirectional port and a first and second unidirectional port, the single bidirectional ports of the passive optical means (416, 418) being connected to or defining the first and second remote port (222, 224) of the optical coupler device (218B), and the first and second unidirectional ports being connected to unidirectional optical paths to the optical receiver (216) and from the optical transmitter (214), respectively, and, in case the optical coupler device (218B) provides a pass-through capability, to and from unidirectional optical pass-through paths.

11. A method of establishing a bidirectional traffic relationship between at least one edge node and a first and a second core node of an optical network, **characterized in**
(a) **that** a combined upstream optical signal (Uₒₚₜ) is created by each of the at least one edge nodes (202), each combined upstream optical signal (Uₒₚₜ) comprising a first upstream optical channel signal (U_{1,opt}) at a first optical center frequency for establishing the traffic relationship from the respective edge node (202) to the first core node (204) and a second upstream optical channel signal (U_{2,opt}) at a differing second optical center frequency for establishing the traffic relationship from the respective edge node (202) to the second core node (206) using a sub-carrier modulation technique by directly modulating the single optical source or by modulating the optical signal created by the single optical source using a single optical modulator, wherein each combined upstream optical signal (Uₒₚₜ) is split and fed to both the first and second core node (204, 206),
(b) **that** the combined upstream optical signals (Uₒₚₜ) are received by the first and the second core node (204, 206) using a sub-carrier demodulation technique, wherein only the first upstream optical channel signals (U_{1,opt}) are demodulated by the first core node (204) and only the second upstream optical channel signals (U_{2,opt}) are demodulated by the second core node (206),
(c) **that**, for establishing the traffic relationship from the first core node (204) to each of the edge nodes (202), a respective first downstream optical channel signal (D_{1,opt}) is created by the first core node (202) at a third optical center frequency and, for establishing the traffic relationship from the second core node (204) to each of the edge nodes (202), a respective second downstream optical channel signal (D_{2,opt}) is created by the second core node (206) at a fourth differing optical center frequency, wherein at least the first and second downstream optical channel signals (D_{1,opt}, D_{2,opt}) that are intended for a respective one of the at least one edge nodes (202) are fed to the respective edge node (202), and
(d) **that** at least the first and second downstream optical channel signals (D_{1,opt}, D_{2,opt}) that are intended for a respective one of the at least one edge nodes (202) are received by the respective edge node (202) by combining them to a combined downstream optical signal (Dₒₚₜ) and demodulating the combined downstream optical signal (Dₒₚₜ) using a sub-carrier demodulation technique, wherein only the third and fourth downstream optical channel signals that are intended for the respective edge node are demodulated.

12. The method according to claim 7, **characterized in that** the first and second upstream channel signals (U_{1,opt}, U_{2,opt}) created by each of the edge nodes (202) have center frequencies identical with the center frequencies of the first and second downstream channel signals (D_{1,opt}, D_{2,opt}) created by the first and second core node (204, 206) for establishing the traffic relationship from the first and second core node (204, 206) to the respective edge node (202).

13. The method according to claim 7, **characterized in that** the first and second upstream channel signals (U_{1,opt}, U_{2,opt}) created by each of the edge nodes (202)have center frequencies different from the center frequencies of the first and second downstream channel signals (D_{1,opt}, D_{2,opt}) created by the first and second core node (204, 206) for establishing the traffic relationship from the first and second core node (204, 206) to the respective edge node (202).

14. The method according claim 9, **characterized in that** a bidirectional traffic relationship is established between each of at least two edge nodes (202) and the first and second core node (204, 206), wherein the at least two edge nodes (202) are cascaded by connecting first and second remote ports (222, 224) of each pair of neighboring edge nodes (202) and by connecting the first remote port (222) of a first edge node (202) of the series of two or more edge nodes to the remote port (226) of the first core node (204) and the second remote port (224) of a last edge node (202) of the series of two or more edge nodes to the remote port (228) of the second core node (206, and wherein all optical channel signals are passed through by each edge node (202) in the direction to the neighboring edge node (202) or core node (204, 206).

15. The method according to claim 8 or 9, **characterized in that** a bidirectional traffic relationship is established between each of at least two edge nodes (202) and the first and second core node (204, 206), wherein a series of two or more edge nodes are cascaded by using an optical router (304) for each edge node (202) and an optical WDM scheme, the optical routers being provided within the optical path (208) connecting the first and second core node (204, 206), wherein the first and the second core node (204, 206) create the respective downstream optical channel signals (D_{1,opt}, D_{2,opt}) for establishing the traffic relationships with each of the edge nodes (202) in such a way that each downstream optical channel signal (D_{1,opt}, D_{2,opt}) lies withing a dedicated optical downstream WDM channel, wherein each edge node (202) creates the respective upstream optical channel signal (U_{1,opt}, U_{2,opt}) in such a way that it lies withing a dedicated optical upstream WDM channel and wherein each optical router (304) routes the downstream optical channel signals (D_{1,opt}, D_{2,opt}) intended for a respective edge node (202) to this edge node (202) without passing through these downstream optical channel signals (D_{1,opt}, D_{2,opt}) and routes the upstream optical channel signals (U_{1,opt}, U_{2,opt}) created by the respective edge node (202) to the first and second core node (204, 206).
